(19) Europäisches Patentamt / European Patent Office / Office européen des brevets

(11) **EP 3 114 597 B1**

(12) **FASCICULE DE BREVET EUROPEEN**

(45) Date de publication et mention
de la délivrance du brevet:
**04.12.2019 Bulletin 2019/49**

(21) Numéro de dépôt: **15707680.3**

(22) Date de dépôt: **05.03.2015**

(51) Int Cl.:
*G06F 16/33* (2019.01)    *G06F 16/36* (2019.01)

(86) Numéro de dépôt international:
**PCT/EP2015/054634**

(87) Numéro de publication internationale:
**WO 2015/132342 (11.09.2015 Gazette 2015/36)**

(54) **PROCÉDÉ D'ANALYSE D'UNE PLURALITÉ DE MESSAGES, PRODUIT PROGRAMME D'ORDINATEUR ET DISPOSITIF ASSOCIÉS**

VERFAHREN ZUR ANALYSE VON MEHREREN NACHRICHTEN SOWIE ENTSPRECHENDES COMPUTERPROGRAMMPRODUKT UND VORRICHTUNG

METHOD FOR ANALYSING A PLURALITY OF MESSAGES, AND ASSOCIATED COMPUTER PROGRAMME PRODUCT AND DEVICE

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **05.03.2014 FR 1400547**

(43) Date de publication de la demande:
**11.01.2017 Bulletin 2017/02**

(73) Titulaire: **THALES**
**92400 Courbevoie (FR)**

(72) Inventeurs:
• **GOUTTAS, Catherine**
**F-92622 Gennevilliers (FR)**
• **DELAVALLADE, Thomas**
**F-92622 Gennevilliers (FR)**
• **CANUS, Christophe**
**F-92622 Gennevilliers (FR)**

(74) Mandataire: **Lavoix**
**2, place d'Estienne d'Orves**
**75441 Paris Cedex 09 (FR)**

(56) Documents cités:
**EP-A2- 2 560 111**

**Description**

La présente invention concerne un procédé d'analyse d'une pluralité de messages, chaque message comprenant une pluralité de champs deux à deux distincts, dont au moins un champ relatif au contenu du message et un champ relatif au contexte d'émission du message, chaque champ comportant une valeur, le procédé étant mis en œuvre par un ordinateur.

L'invention concerne également un produit programme d'ordinateur comportant des instructions logicielles qui, lorsqu'elles sont mises en œuvre par un ordinateur, mettent en œuvre un tel procédé.

L'invention concerne également un dispositif d'analyse d'une pluralité de messages, propre à mettre en œuvre un tel procédé.

L'invention s'applique par exemple au domaine de la surveillance et de l'analyse des médias sociaux.

Il est connu d'avoir recours à des procédés pour l'analyse de contenus, notamment textuels, publiés sur des médias sociaux, par exemple dans le cadre de la lutte contre la cybercriminalité. Le document EP 2 560 111 A2 décrit un procédé, mis en œuvre par ordinateur, d'analyse d'une pluralité de messages.

De tels procédés se fondent généralement sur une analyse des contenus textuels basée sur la recherche de mots-clés ou sur une analyse des relations entre les auteurs de ces contenus.

Néanmoins, ces procédés ne donnent pas entière satisfaction. En effet, ils ne donnent pas accès, lorsqu'ils sont mis en œuvre, à une analyse fine des contenus publiés sur les médias sociaux. Par « analyse fine », on entend par exemple le fait de simultanément :

- suivre des discussions dans le temps et dans l'espace géographique, et
- permettre la récolte de connaissances sur la structure, les comportements et pratiques de communautés surveillées.

De telles limitations proviennent notamment du fait que les contenus à analyser représentent des quantités de données importantes.

Un but de l'invention est donc de proposer un procédé d'analyse d'une pluralité de messages permettant une analyse fine d'une quantité de données importante.

A cet effet, l'invention a pour objet un procédé selon la revendication 1.

En effet, lorsqu'il est mis en œuvre, le procédé extrait, d'un ensemble initial de données à analyser, des sous-ensembles de données, constitués par les couples, dont la taille est plus réduite que l'ensemble initial des messages.

Un tel traitement permet de diviser les données à analyser en données de taille réduite, ce qui permet une analyse plus fine des messages à analyser. En outre, cette division permet un affichage plus rapide des données à analyser.

Suivant d'autres aspects avantageux de l'invention, le procédé est selon l'une quelconque des revendications 2 à 10.

En outre, l'invention a pour objet un produit programme d'ordinateur selon la revendication 11.

En outre, l'invention a pour objet un dispositif d'analyse d'une pluralité de messages, selon la revendication 12.

L'invention sera mieux comprise à l'aide de la description qui va suivre, donnée uniquement à titre d'exemple non limitatif et faite en se référant aux dessins annexés sur lesquels :

- la figure 1 est une représentation schématique d'un dispositif d'analyse selon l'invention, avant mise en œuvre du procédé selon l'invention ;
- la figure 2 est une représentation du dispositif de la figure 1, après mise en œuvre du procédé selon l'invention ;
- la figure 3 est un organigramme du procédé d'analyse selon l'invention ;
- la figure 4 est une représentation schématique d'une vue affichée par le dispositif de la figure 2 ;
- la figure 5 est un organigramme du traitement d'une requête d'un utilisateur par le dispositif de la figure 2 ; et

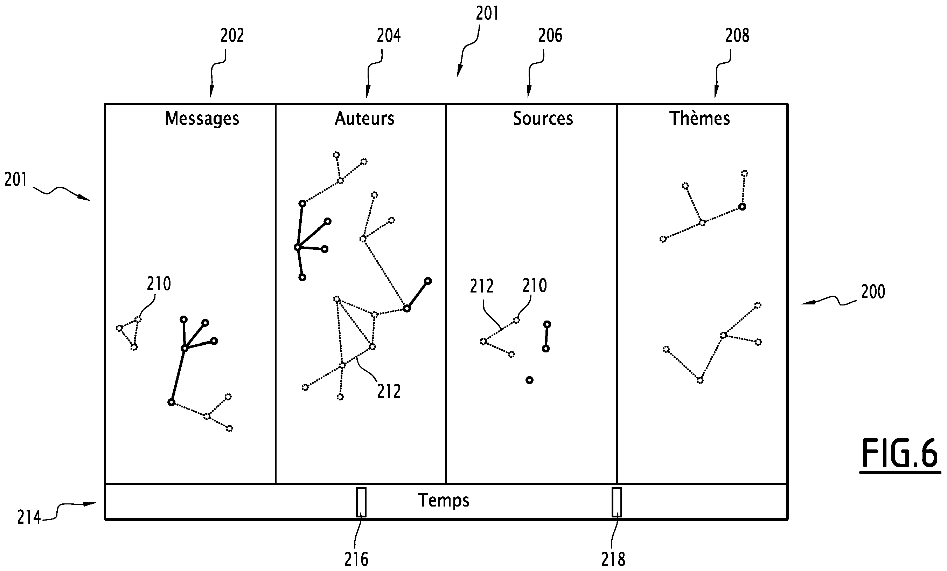

- la figure 6 est une vue analogue à celle de la figure 4, après traitement d'une requête d'un utilisateur.

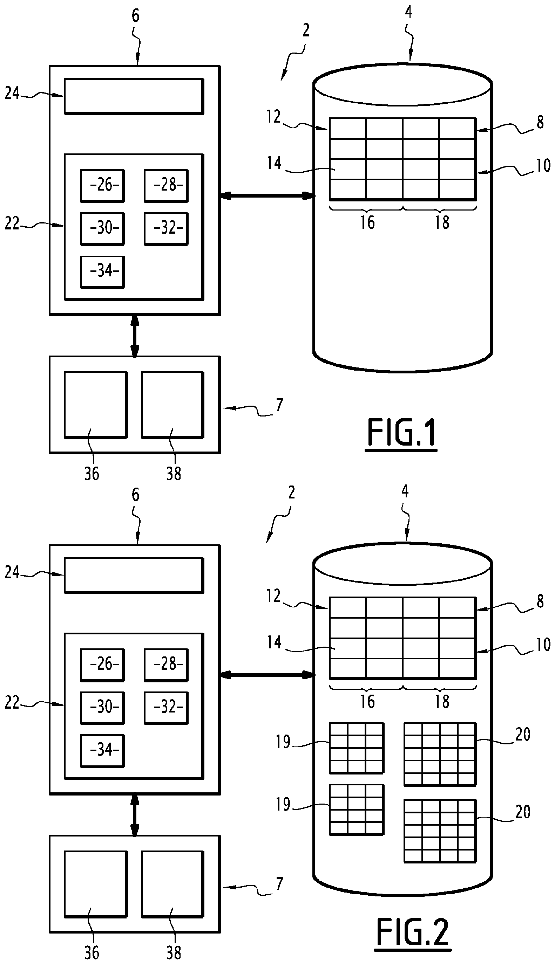

Le dispositif d'analyse 2, représenté sur les figures 1 et 2, comporte une base de données 4, une unité de traitement 6 pour agir sur la base de données 4 et une interface d'interaction 7 pour saisir des requêtes relatives au contenu de la base de données 4 et pour afficher des vues relatives au contenu de la base de données 4.

La base de données 4 est adaptée pour stocker une pluralité de tables 8. En particulier, la base de données 4 est adaptée pour stocker une table principale 10.

La table principale 10 est adaptée pour stocker une pluralité de messages 12.

Les messages 12 sont, par exemple, des messages collectés depuis des médias sociaux, tels que des forums, des réseaux sociaux tels que Twitter ou Facebook, ou encore toute autre plateforme adaptée pour une interaction sociale en ligne, et la création et la publication en ligne de contenu.

Chaque message 12 comprend une pluralité de champs 14, comprenant chacun une valeur. Les messages 12 comportent les mêmes types de champs 14, d'un message à l'autre.

Les champs 14 sont deux à deux distincts. Les champs 14 d'un message 12 comportent au moins un champ 16 relatif au contenu du message 12 et un champ 18 relatif au contexte d'émission du message 12.

Par exemple, les champs 16 relatifs au contenu du message 12 comprennent le corps d'un texte publié sur un média social, ou encore le titre de ce texte.

Par exemple, les champs 18 relatifs au contexte d'émission du message 12 comprennent l'auteur d'un contenu publié sur un média social, la plateforme, ou encore la source, sur laquelle le contenu a été publié, la date de publication du contenu, l'adresse Internet de la page sur laquelle a été enregistré le contenu, ou la géolocalisation du terminal électronique à partir duquel le contenu a été publié.

Les champs 16, 18 d'un même message 12 comprennent des valeurs se rapportant toutes à un même contenu publié en ligne.

La base de données 4 est en outre adaptée pour stocker une pluralité de tables secondaires 19, et une pluralité de tables d'association 20, comme illustré sur la figure 2. Au moins une table secondaire 19 est associée à un champ 14 des messages 12.

Les tables secondaires 19 et les tables d'association 20 seront décrites ultérieurement.

L'unité de traitement 6 est adapté pour agir sur la base de données 4, notamment sur les tables 10, 19, 20 de la base de données 4.

L'unité de traitement 6 comprend une mémoire 22 et un processeur 24.

La mémoire 22 est propre à stocker un logiciel 26 de lecture-écriture dans la base de données 4, un logiciel de comparaison 28, un logiciel 30 d'analyse sémantique des valeurs des champs 16 relatifs au contenu d'un message 12 et un logiciel 32 de regroupement thématique.

Le logiciel de lecture-écriture 26 est adapté pour lire les valeurs des champs 14 des tables 10, 19, 20 stockées dans la base de données 4. Le logiciel de lecture-écriture 26 est également adapté pour modifier la valeur d'un champ 14, pour créer un champ 14 ou pour créer une table 10, 19, 20 dans la base de données 4.

Le logiciel de comparaison 28 est adapté pour établir les relations entre les champs 14 des différents messages 12.

Le logiciel d'analyse sémantique 30 est adapté pour analyser le contenu des champs 16 relatifs au contenu d'un message 12 pour en extraire des mots pertinents quant au contenu d'un message 12, encore appelés « mots-clés ». Par exemple, sont considérés comme pertinents les mots des messages 12 qui n'apparaissent pas dans un premier dictionnaire prédéterminé de mots non-pertinents et qui apparaissent dans un deuxième dictionnaire prédéterminé de mots pertinents. En variante, tous les mots qui n'apparaissent pas dans le premier dictionnaire sont considérés comme pertinents.

De façon optionnelle, le logiciel d'analyse sémantique 30 est propre à normaliser au préalable le contenu des champs 16 par des procédés usuels de traitement automatique du langage naturel, par exemple des procédés de lemmatisation ou de racinisation.

Par normalisation, on entend par exemple la transformation des verbes conjugués en leur forme à l'infinitif, la transformation des noms en leur forme au singulier et la transformation des adjectifs en leur forme au masculin singulier.

Par « analyse sémantique », on entend, au sens de la présente invention, l'analyse de la signification des mots d'un message.

De manière générale, on entend par « sémantique » ce qui est relatif à la signification des mots.

Le logiciel de regroupement thématique 32 est adapté pour créer des groupes de messages 12 sémantiquement homogènes. Par exemple, le logiciel de regroupement thématique est adapté pour créer des groupes de messages selon une méthode statistique classique appelée « classification ». Un groupe sémantiquement homogène, encore appelé « thème », est un ensemble de messages 12 dont les contenus sémantiques sont suffisamment similaires entre eux et suffisamment dissimilaires des contenus sémantiques des messages 12 des autres thèmes au regard d'un seuil de similarité prédéterminé. De telles mesures de similarité se fondent par exemple sur une mesure de distance entre contenus sémantiques.

Pour deux vecteurs représentant chacun un message 12, on entend par exemple par « distance » la norme euclidienne de la différence des deux vecteurs, ou encore le produit scalaire des deux vecteurs. De tels vecteurs sont décrits ultérieurement.

Pour deux mots-clés distants d'une distance D, la similarité s est par exemple donnée par la fonction :

$$s = 1 - \frac{D}{D_{\max}}$$

où $D_{\max}$ est la distance maximale entre deux mots-clés.

La similarité entre deux mots est par exemple obtenue par la fonction :

$$s = \exp\left[-\frac{D}{\alpha}\right]$$

où $\alpha$ est le nombre total de mots-clés.

L'identification des thèmes passe par l'optimisation d'une fonction-objectif dans laquelle intervient la similarité entre contenus sémantiques.

Une telle fonction-objectif est par exemple la fonction-objectif de l'algorithme des K-moyennes classiquement connu :

$$J = \sum_{i=1}^{K} \sum_{x_j \in C_i} \left\| x_j - c_i \right\|^2$$

où K est le nombre de thèmes à construire, $C_i$ est le $i^{\text{ème}}$ thème, $x_j$ est un vecteur représentant le $j^{\text{ème}}$ message 12 du thème $C_i$, $c_i$ est le barycentre des messages 12 appartenant au thème $C_i$, et $\|x_j\text{-}c_i\|$ est la norme euclidienne, également norme 2, du vecteur $x_j$ - $c_i$. $\|x_j\text{-}c_i\|$ est entre outre la distance D entre les vecteurs $x_j$ et $c_i$.

En général, le vecteur x représentant un message 12 est un vecteur comportant autant de composantes qu'il y a de mots-clés dans un dictionnaire recensant l'ensemble des mots-clés de tous les messages 12, chaque composante étant associée à un unique mot-clé, l'association entre composante d'un vecteur x et un mot-clé du dictionnaire étant la même pour tous les vecteurs x. Chaque composante du vecteur x qui est associé à un message 12 donné a pour valeur le poids du mot-clé correspondant pour le message 12. Diverses méthodes permettent le calcul du poids d'un mot-clé dans un message 12, c'est-à-dire de la valeur de la composante associée dans le vecteur x correspondant au message 12 :

- un codage binaire dans lequel une composante prend la valeur 1 si le message contient le mot-clé en question et 0 sinon ; ou
- un codage fréquentiel, appelé TF (de l'anglais « Term Frequency »), dans lequel une composante a pour valeur la fréquence normalisée d'apparition du mot-clé dans le message, c'est-à-dire le ratio entre la fréquence d'apparition du mots-clés dans le message et la nombre total de mots-clés du message; ou
- un codage fréquentiel pondéré, appelé TF-IDF (de l'anglais « Term Frequency - Inverse Document Frequency »), dans lequel une composante a pour valeur la fréquence normalisée d'apparition du mot-clé dans le message, pondérée par un facteur inversement proportionnel au nombre de messages 12 dans lesquels le mot-clé apparaît.

La mise en œuvre de l'algorithme des K-moyennes conduit à une partition des messages 12 qui minimise la fonction-objectif J. La partition ainsi obtenue conduit à une dispersion des messages 12 de chaque thème autour du barycentre du thème, garantissant ainsi l'obtention de thèmes homogènes.

Une autre fonction-objectif possible s'écrit :

$$F(C) = \sum_{i=1}^{n} \sum_{j=1}^{n} \left( s_{ij} c_{ij} + \left( \frac{s_{ii} + s_{jj}}{2} - s_{ij} \right)\left(1 - c_{ij}\right) \right)$$

où n est le nombre total de messages 12 à traiter, $s_{ij}$ est la valeur de la similarité entre deux messages 12 identifiés par des identifiants i et j, $c_{ij}$ est le terme (i,j) de la matrice de la partition que l'on cherche à construire et vaut 1 si i et j appartiennent au même thème et 0 sinon. En général, la similarité entre deux messages 12 est prise égale au nombre de mots-clés que lesdits messages ont en commun, éventuellement normalisé par le nombre de mots-clés du message 12 comportant le moins de mots-clés. $s_{ij}$ est la valeur de la similarité pour une distance D égale au produit scalaire des vecteurs $x_i$ et $x_j$ qui sont respectivement le vecteur représentant du message i et le vecteur représentant du message j.

Une telle fonction est par exemple décrite dans le document EP 1960916 A1, page 10 ligne 11 à page 11 ligne 21.

La fonction-objectif F(C) présente l'avantage de ne pas nécessiter de fixer le nombre de thèmes homogènes à construire. En outre, l'optimisation de cette fonction-objectif est par exemple réalisée par des approches linéaires. La fonction-objectif F(C) rend donc possible le traitement d'un très grand nombre de messages 12.

Le logiciel de regroupement thématique 32 est en outre propre à déterminer une étiquette linguistique pour chaque thème. L'étiquette linguistique est un résumé, compréhensible par un humain, du contenu de chaque thème. L'étiquette linguistique d'un thème est constituée des mots-clés les plus caractéristiques du thème. L'étiquette linguistique d'un thème est par exemple un ensemble de cardinal prédéterminé, comprenant les mots-clés présentant le score de pertinence le plus élevé au regard d'une mesure de pertinence P prédéterminée. Un exemple de mesure de pertinence P, inspiré du codage TF-IDF, est donné par :

$$P_c(t_i) = \frac{r_c(i)}{\max_j(r_c(j))} \times \log \frac{K}{\left|\{c' | r_c(i) > 0\}\right|}$$

où $K$ est le nombre de thèmes, $t_i$ est le $i^{ème}$ mot-clé dont on souhaite estimer la pertinence vis-à-vis du thème c et $r_c(i)$ est la $i^{ème}$ composante d'un vecteur représentant du thème c, c'est-à-dire un vecteur dont chaque composante est associée à un mot-clé, et dont la valeur est égale au nombre de messages 12 du thème c contenant le mot-clé correspondant. Ainsi, $r_c(i) > 0$ pour un thème donné signifie que le thème contient au moins un message utilisant un mot-clé $t_i$.

De façon optionnelle, un utilisateur modifie l'étiquette linguistique d'un thème pour permettre une meilleure compréhension du contenu du thème.

Le logiciel de regroupement thématique 32 est en outre adapté pour calculer une fonction de similarité de deux thèmes distincts et comparer le résultat de ce calcul à une valeur prédéterminée, dite « seuil inter-thème ». La fonction de similarité de deux thèmes distincts est par exemple une fonction dont les variables sont les mots-clés associés aux deux thèmes, et dont le résultat est une valeur numérique, dite « similarité inter-thème», représentative de la similarité entre les deux thèmes. Par exemple, plus la valeur calculée de la similarité inter-thème est élevée, plus les thèmes sont sémantiquement proches. Si la valeur calculée est supérieure au seuil inter-thème, les thèmes considérés sont dits similaires.

Un exemple de fonction de similarité entre deux thèmes c et c' s'écrit :

$$S(c,c') = r_c \bullet r_{c'} - \frac{1}{4}\left(|c| \times |r_{c'}| + |c'| \times |r_c|\right)$$

où $r_c$ est un vecteur représentatif du thème c, $r_{c'}$ est un vecteur représentatif du thème c', • désigne le produit scalaire, $|c|$ est le nombre de messages (12) du thème c, $|c'|$ est le nombre de messages (12) du thème c', $|r_c|$ est la norme 1 du vecteur $r_c$ et $|r_{c'}|$ est la norme 1 du vecteur $r_{c'}$. Par « norme 1 d'un vecteur », on entend la somme des valeurs absolues des composantes du vecteur.

Le processeur 24 est propre à charger et à exécuter chacun des logiciels 26, 28, 30, 32, 34 stockés dans la mémoire 22.

L'interface d'interaction 7 comprend des moyens de saisie 36 pour permettre la saisie de requêtes relatives au contenu de la base de données 4. L'interface d'interaction 7 comprend également des moyens de visualisation 38 pour afficher des vues relatives au contenu de la base de données 4.

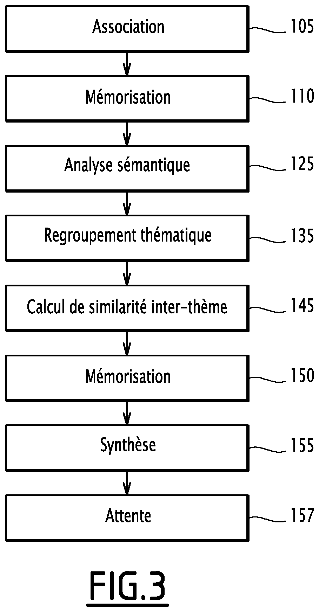

Le fonctionnement du dispositif d'analyse 2 va maintenant être décrit, en référence aux figures 2 et 3.

Durant une étape initiale 105, la base de données 4 stocke une table principale 10, des tables secondaires 19 et des tables d'association 20. Les tables d'association 20 ne sont pas peuplées, c'est-à-dire ne sont pas remplies.

La table principale 10 comporte une pluralité de messages 12.

Les messages 12 stockés dans la table principale 10 sont formés par l'ensemble des messages collectés, ou une partie des messages collectés, les messages 12 de la partie étant choisis individuellement par un utilisateur ou par l'intermédiaire de requêtes saisies via un moteur de recherche.

Au moins une table secondaire 19 est associée à un champ prédéterminé parmi les champs 18 relatifs au contexte d'émission des messages 12 stockés dans la table principale 10.

Par exemple, de tels messages 12 de la table principale 10 sont :

| id | URL | titre | Texte | id auteur | id source | date | lieu |
|----|-----|-------|-------|-----------|-----------|------|------|
| 1 | url1.com/1 | Beau temps | Temps radieux à Paris aujourd'hui. | b1 | s1 | 11 juin 2013, 7h32 | 48°51'N 2°21'E |
| 2 | url.1 com/2 | Balade en ville | Je confirme : « Temps radieux à Paris aujourd'hui » | b2 | s1 | 11 juin 2013, 7h32 | 48°51'N 2°21'E |

(suite)

| id | URL | titre | Texte | id auteur | id source | date | lieu |
|---|---|---|---|---|---|---|---|
| 3 | url1.com/3 | Etonnant | Pierre, je ne comprends plus rien à la météo parisienne. | b3 | s1 | 11 juin 2013, 7h34 | 43°36' 16"N 1°26'E |
| 4 | url2.com/4 | Gâteau | Une bonne recette de gâteau : gateau.fr/gateau | b4 | s2 | 11 juin 2013, 7h35 | 48°51'N 2°21'E |
| 5 | url2.com/5 | Vacances | Fin des vacances, je suis de retour à Paris. | b5 | s2 | 26 juin 2013, 9h50 | 48°51'N 2°21'E |

Les champs « titre » et « texte » sont les champs 16 représentatifs du contenu des messages 12.

Les champs « URL », « date » et « lieu » sont des champs 18 représentatifs du contexte d'émission des messages 12. Les champs « date » et « lieu » sont encore appelés « métadonnées ». Chaque champ « id » comporte un identifiant unique du message 12 correspondant.

Par « URL » (de l'anglais « Uniform Resource Locator »), on entend une chaîne de caractères utilisée pour faire référence à une ressource web, telle que décrite dans la norme RFC 3986.

Les champs « id auteur » et « id source » comportent respectivement les identifiants uniques des champs « auteur » et « source », qui sont des champs 18 relatifs du contexte d'émission des messages 12.

Par la suite, un message 12 dont le champ « id » comporte une valeur k sera désigné par « message-k ». En outre, durant l'étape 105, pour chaque message 12, et pour chaque champ 18 prédéterminé, le logiciel de lecture-écriture 26 écrit dans la table secondaire 19 correspondante l'identifiant unique et la valeur du champ 18 associé ainsi qu'optionnellement des informations complémentaires associées à la valeur du champ 18. De telles informations complémentaires sont par exemple l'URL associée à la valeur du champ 18.

Dans l'exemple, pour une table secondaire 19 associée aux auteurs, au cours de l'étape 105, le logiciel de lecture-écriture 26 écrit :

| id auteur | auteur | URL auteur |
|---|---|---|
| b1 | Pierre | url1.com/b1 |
| b2 | Paul | url1.com/b2 |
| b3 | Jean | url1.com/b3 |
| b4 | Jacques | url2.com/b4 |
| b5 | Matthieu | url2.com/b5 |

Chaque champ « id auteur » comporte un identifiant unique de l'auteur correspondant.

Dans l'exemple, pour une table secondaire 19 associée aux sources, au cours de l'étape 105, le logiciel de lecture-écriture 26 écrit :

| id source | source | URL source |
|---|---|---|
| s1 | Forum 1 | url1.com |
| s2 | Forum 2 | url2.com |

Chaque champ « id source » comporte un identifiant unique de la source correspondante.

En outre, au cours de l'étape 105, le logiciel de lecture-écriture 26 lit, pour chaque message 12, la valeur de chacun des champs 16 relatifs au contenu du message 12 et le logiciel de comparaison 28 compare cette valeur avec la valeur de chacun des champs 14 des autres messages 12.

En variante, le logiciel de comparaison 28 compare la valeur de chacun des champs 16 relatifs au contenu d'un message 12 avec la valeur de champs 14 prédéterminés des autres messages 12.

Par exemple, le logiciel de comparaison 28 compare la valeur des champs « titre » et « texte » d'un message 12 uniquement à la valeur des champs « URL », « titre », « texte », « auteur » des autres messages 12.

Dans l'exemple, le logiciel de comparaison 28 compare la valeur des champs « titre » et « texte » de chaque message 12 à la valeur des champs « URL », « titre », « texte », « auteur » des autres messages 12.

Si, au cours de l'étape 105, le logiciel de comparaison 28 trouve dans un champ 14, encore appelé « champ citant », d'un premier message 12 une valeur contenue dans un champ 16, encore appelé « champ cité », relatif au contenu d'un deuxième message 12, alors le logiciel de lecture-écriture 26 écrit, au cours d'une étape suivante 110, dans une table d'association 20, un couple comportant un identifiant de la valeur du champ citant du premier message 12 et un identifiant de la valeur du champ cité du deuxième message 12.

Chaque entrée de la table d'association 20 correspond à un couple unique.

Dans l'exemple, au cours de l'étape 105, le logiciel de comparaison 28 trouve dans le champ « texte » de message-2 une phrase égale à la valeur du champ « texte » de message1.

En outre, au cours de cette même étape 105, le logiciel de comparaison 28 trouve dans le champ « texte » de message-3 un mot égal à la valeur du champ « auteur » de message-1.

Ainsi, le logiciel de lecture-écriture 26 écrit, au cours de l'étape 110, dans une table d'association 20 correspondant aux messages 12 :

| id asso message | id message citant | id message cité |
|:---:|:---:|:---:|
| 101 | 2 | 1 |

Chaque champ « id asso message » comporte un identifiant unique du couple correspondant de messages 12.

La table d'association 20 relative aux messages 12 indique l'existence d'une association entre un premier texte d'un premier message 12, dont l'identifiant unique de la table principale 10 est renseigné dans le champ « id message citant », et un deuxième texte d'un deuxième message 12, dont l'identifiant unique de la table principale 10 est renseigné dans le champ « id message cité ». En l'occurrence, le texte de message-2 cite le texte de message-1.

En outre, le logiciel de lecture-écriture 26 écrit, au cours de l'étape 110, dans une autre table d'association 20 correspondant au champ « auteur » :

| id asso auteur | id auteur citant | id auteur cité |
|:---:|:---:|:---:|
| 201 | b3 | b1 |

Chaque champ « id asso auteur » comporte un identifiant unique du couple d'auteurs correspondant.

La table d'association 20 relative au champ « auteur » indique l'existence d'une association entre un premier auteur (Jean), dont l'identifiant unique de la table 19 secondaire des auteurs est renseigné dans le champ « id auteur citant », et un deuxième auteur (Pierre), dont l'identifiant unique de la table 19 secondaire des auteurs est renseigné dans le champ « id auteur cité ». En l'occurrence, Jean (d'identifiant b3) cite Pierre (d'identifiant b1).

En outre, au cours de l'étape 110, le logiciel de lecture-écriture 26 écrit, dans une table d'association 20 correspondant à un deuxième champ distinct du champ cité, un couple comportant un identifiant de la valeur du deuxième champ de chacun parmi le premier message et le deuxième message.

Dans l'exemple, au cours de l'étape 110, au regard du couple identifié par « id asso message = 101 », le premier message est message-2 et le deuxième message est message-1. En l'occurrence, l'auteur de message-2 (Paul) cite le texte publié par l'auteur de message-1 (Pierre).

La table d'association 20 correspondant au champ « auteur » est alors complétée comme suit :

| id asso auteur | id auteur citant | id auteur cité |
|:---:|:---:|:---:|
| 201 | b3 | b1 |
| 202 | b2 | b1 |

Au cours d'une étape suivante 125, pour chaque message 12, le logiciel de lecture-écriture 26 lit la valeur des champs 16 relatifs au contenu du message 12, puis le logiciel d'analyse sémantique 30 détermine des mots-clés représentatifs du sens du contenu du message 12.

Puis le logiciel de lecture-écriture 26 écrit, dans une table d'association 20 relative aux mots-clés, un n-uplet comportant un identifiant du message 12 et les mots-clés correspondants, chaque entrée de la table 20 étant relative à un unique message 12.

Par « n-uplet », on entend un ensemble constitué de n éléments.

Dans l'exemple, à l'issue des étapes 125, 130, la table d'association 20 relative aux mots-clés est par exemple :

| id asso cle | id | mots-clés |
|:---:|:---:|:---|
| 301 | 1 | temps ; radieux ; Paris ; aujourd'hui |
| 302 | 2 | confirmer ; temps ; radieux ; Paris ; aujourd'hui |
| 303 | 3 | Pierre ; comprendre ; météo ; Paris |
| 304 | 4 | bon ; recette ; gâteau ; gateau.fr/gateau |
| 305 | 5 | fin ; vacances ; retour ; Paris. |

Chaque champ « id asso cle » comporte un identifiant unique du n-uplet comportant un message 12 et les mots-clés correspondants.

Au cours d'une étape suivante 135, le logiciel de regroupement thématique 32 regroupe les messages 12 sémantiquement homogènes en thèmes. Chaque thème est identifié par l'étiquette linguistique correspondante.

Le logiciel de lecture-écriture 26 écrit dans une table secondaire 19 relative aux thèmes :

| id theme | étiquette linguistique |
|:---:|:---|
| c1 | temps, radieux, météo |
| c2 | Paris, ville |
| c3 | gâteau, recette |

Chaque valeur du champ « id theme » comporte un identifiant unique du thème correspondant. Chaque valeur du champ « étiquette linguistique » comporte les mots-clés les plus caractéristiques du thème correspondant. Par « mots-clés caractéristiques d'un thème », on entend les mots-clés qui sont le plus fréquemment employés dans les messages 12 du thème tout en étant rarement employés dans les messages 12 des autres thèmes.

Le logiciel de lecture-écriture 26 écrit en outre dans une table d'association 20 relative aux thèmes et aux messages 12 qu'il comporte :

| id asso theme | id theme | id |
|:---:|:---:|:---:|
| 401 | c1 | 1, 2, 3 |
| 402 | c2 | 1, 2, 3, 5 |
| 403 | c3 | 4 |

En variante, le logiciel de regroupement thématique 32 est tel qu'un message 12 appartient à un seul et unique thème.

En outre, chaque champ « id asso theme » comporte un identifiant unique du n-uplet comprenant un thème et les messages 12 associés au thème. Par exemple, chaque champ « id theme » comporte l'identifiant du thème, dans la table secondaire 19 relative aux thèmes, associé à l'identifiant des messages 12 correspondants.

Au cours d'une étape suivante 145, le logiciel de regroupement thématique 32 calcule, pour une pluralité de paires de thèmes, chaque paire comprenant un premier thème et un deuxième thème, la valeur de la fonction de similarité inter-thème pour chaque paire de thème. Le logiciel de calcul 34 compare ensuite la valeur obtenue au seuil inter-thème.

Au cours d'une étape suivante 150, si, pour une paire de thèmes, la valeur obtenue à l'issue de l'étape 145 est supérieure au seuil inter-thème, le logiciel de lecture-écriture 26 écrit, dans une deuxième table d'association 20 relative aux thèmes, un couple comportant l'identifiant du premier thème et l'identifiant du deuxième thème.

Dans l'exemple, à l'issue des étapes 145, 150, le logiciel de lecture-écriture 26 écrit par exemple, dans une deuxième table d'association 20 relative aux thèmes :

| id asso inter | id theme 1 | id theme 2 |
|:---:|:---:|:---:|
| 501 | c2 | c1 |

Chaque champ « id asso inter » comporte un identifiant unique du couple comprenant le premier thème et le deuxième thème pour lesquels la valeur de la similarité inter-thème est supérieure au seuil inter-thème.

Au cours d'une étape suivante 155, l'unité de traitement 6 traite les données contenues dans la table principale 10 et les tables 19, 20 pour élaborer des données à afficher.

A partir des données contenues dans la table principale 10 et les tables secondaires 19 renseignées au cours des étapes 105 à 150, le logiciel de lecture-écriture 26 peuple une table secondaire 19 de synthèse, encore appelée « table des nœuds », chaque entrée de la table des nœuds correspondant à un nœud, noté $N_k$.

Par « nœud », on entend au sens de la présente invention un message 12, un thème, ou encore une valeur prise par un champ 14.

De façon optionnelle, les nœuds correspondant à au moins un champ 14 prédéterminé des messages 12, par exemple les champs « auteur », « source », comportent des métadonnées relatives au message 12 dont le champ 14 prend la valeur associée au nœud considéré.

De préférence, chaque nœud comprend une étiquette identifiant s'il est associé à un message 12, un thème ou à un champ 14, et, dans ce cas, à quel champ 14 il est associé. Une étiquette prend par exemple la valeur « message », « auteur », « source » ou « thème ».

L'ensemble des nœuds $N_k$ forme un ensemble N.

En outre, à partir des données contenues dans la table principale 10 et les tables d'association 20 renseignées au cours des étapes 105 à 150, le logiciel de lecture-écriture 26 peuple une table d'association 20 de synthèse, encore appelée « table des arcs », chaque entrée de la table des arcs correspondant à un arc.

Par « arc », on entend au sens de la présente invention une association entre un premier nœud $N_k$ et un deuxième nœud $N_p$, notée $A(N_k, N_p)$.

Une telle association est par exemple donnée par la relation entre la valeur d'un champ 14 citant, associée à un premier nœud, et la valeur correspondante d'un champ 14 cité, associé à un deuxième nœud. Par exemple, une telle association est également l'association entre deux thèmes similaires. En outre, une telle association est par exemple l'association entre un message 12 et les champs 14 correspondants.

De telles associations sont décrites par la table principale 10 et les tables d'association 20 renseignées au cours des étapes 105 à 150.

En variante, la table des nœuds et la table des arcs sont enregistrées hors de la base de données 4, dans un fichier stocké dans la mémoire 22.

Dans l'exemple, à l'issue de l'étape 155, la table des nœuds est :

| id nœud | id orig | étiquette |
|---------|---------|-----------|
| x1 | 1 | message |
| x2 | 2 | message |
| x3 | 3 | message |
| x4 | 4 | message |
| x5 | 5 | message |
| x6 | b1 | auteur |
| x7 | b2 | auteur |
| x8 | b3 | auteur |
| x9 | b4 | auteur |
| x10 | b5 | auteur |
| x11 | s1 | source |
| x12 | s2 | source |
| x13 | c1 | thème |
| x14 | c2 | thème |
| x15 | c3 | Thème |

Chaque champ « id nœud » comporte l'identifiant unique du nœud correspondant.

En outre, la table des arcs est :

| id arc | id nœud 1 | id nœud 2 |
|--------|-----------|-----------|
| y1 | x1 | x6 |
| y2 | x1 | x11 |
| y3 | x1 | x13 |
| y4 | x1 | x14 |
| y5 | x2 | x7 |
| y6 | x2 | x11 |
| y7 | x2 | x13 |
| y8 | x2 | x14 |
| y9 | x2 | x1 |
| y10 | x3 | x8 |
| y11 | x3 | x11 |
| y12 | x3 | x13 |
| y13 | x3 | x14 |
| y14 | x3 | x1 |
| y15 | x4 | x9 |
| y16 | x4 | x12 |
| y17 | x4 | x15 |
| y18 | x5 | x10 |
| y19 | x5 | x12 |
| y20 | x5 | x14 |
| y21 | x8 | x6 |
| y22 | x7 | x6 |
| y23 | x12 | x15 |

Au cours d'une étape suivante d'attente 157, l'unité de traitement 6 attend la réception d'instructions d'un utilisateur par le biais de l'interface d'interaction 7.

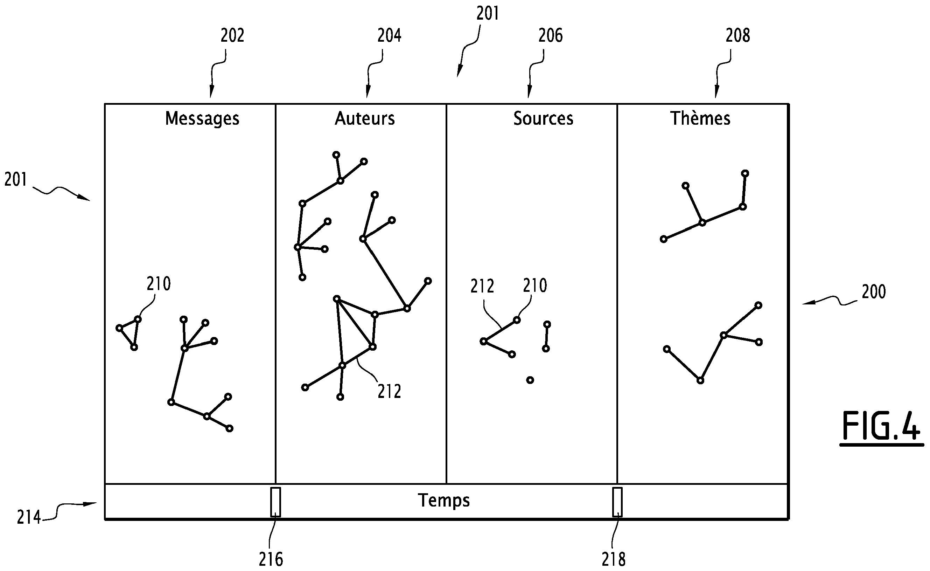

Au cours de cette même étape d'attente 157, le dispositif 2 affiche, sur les moyens de visualisation 38, une vue 200 comprenant une pluralité de graphes 201, comme illustré sur la figure 4.

Chaque graphe 201 est représentatif des différentes valeurs que prend un champ 14 des messages de la table principale 10, et des associations entre ces valeurs.

Par exemple, un premier graphe 202 est représentatif des associations entre les textes des messages 12. Un deuxième graphe 204 est représentatif des associations entre les auteurs des messages 12. Un troisième graphe 206 est représentatif des associations entre les sources des messages 12. Un quatrième graphe 208 est représentatif des associations entre les thèmes des messages 12.

Chaque graphe 201 comporte une pluralité de nœuds 210 et une pluralité d'arcs 212 reliant chacun deux nœuds 210.

De préférence, les arcs 212 sont orientés. Pour chaque arc 212 d'un graphe 201 correspondant à un champ 14 des messages 12, l'arc 212 est orienté depuis un nœud correspondant à un champ citant d'un premier message vers un nœud correspondant à un champ cité d'un deuxième message.

La vue 200 comporte en outre un axe temporel 214, comprenant un curseur de début 216 et un curseur de fin 218.

L'axe temporel 214 est représentatif de la plage temporelle durant laquelle les messages 12 de la table principale 10 ont été émis.

Dans l'exemple, la plage temporelle s'étend du 11 juin 2013 à 7h32 au 26 juin 2013 à 9h50.

Le curseur de début 216 et le curseur de fin 218 sont propres à permettre à un utilisateur de régler la date de début et la date de fin, respectivement, d'une plage temporelle personnalisée.

La plage temporelle personnalisée est telle que les nœuds correspondant à des messages publiés en dehors de la plage temporelle personnalisée peuvent être aisément filtrés dans la vue 200. Par exemple, les nœuds 210 correspondant à des messages publiés en dehors de la plage temporelle personnalisée apparaissent dans une couleur différente de la couleur des autres nœuds 210.

Si un utilisateur sélectionne un ou plusieurs nœuds sur la vue 200, par le biais des moyens de saisie 36, le dispositif 2 affiche, sur la vue 200, uniquement les nœuds pour lesquels il existe un arc avec le ou les nœuds sélectionnés.

En variante, si un utilisateur sélectionne un ou plusieurs nœuds sur la vue 200, par le biais des moyens de saisie 36, le dispositif 2 affiche, sur la vue 200, uniquement les nœuds ayant une étiquette différente pour lesquels il existe un arc avec le ou les nœuds sélectionnés. Ce processus permet ainsi à l'utilisateur de faciliter la navigation inter-graphes.

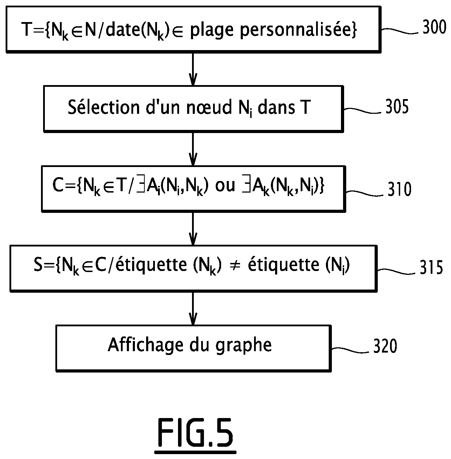

Le procédé relatif à l'affichage va maintenant être détaillé, en référence à la figure 5.

Au cours d'une étape 300, si l'utilisateur a sélectionné une plage temporelle personnalisée, seul l'ensemble T des nœuds associés à un message 12 dont la date de publication se trouve dans la plage temporelle personnalisée sont retenus. L'ensemble T est un sous-ensemble de l'ensemble N des nœuds.

Au cours d'une étape suivante 305, l'utilisateur sélectionne au moins un nœud $N_k$.

Au cours d'une étape suivante 310, seul un sous-ensemble C de l'ensemble des nœuds T est retenu. L'ensemble C est l'ensemble des nœuds de l'ensemble T tel qu'il existe un arc les associant au nœud $N_k$ sélectionné.

Au cours d'une étape optionnelle suivante 315, seul un sous-ensemble S de l'ensemble C est retenu. L'ensemble S est l'ensemble des nœuds dont l'étiquette comprend une valeur différente de la valeur de l'étiquette du nœud $N_k$ sélectionné.

Au cours d'une étape suivante 320, les nœuds de l'ensemble S sont affichés dans la vue 200.

En variante, les nœuds de l'ensemble S sont affichés d'une couleur différente de la couleur des autres nœuds. En variante, les nœuds de l'ensemble S sont affichés en surbrillance. En variante, les nœuds de l'ensemble S sont affichés avec une forme différente de la forme des autres nœuds. En variante, les nœuds de l'ensemble S sont affichés avec un clignotement dont la fréquence est différente de celle des autres nœuds.

Le choix de la plage temporelle personnalisé est également réalisable à l'issue de la sélection de l'au moins un nœud $N_k$.

Sur la vue 200, deux nœuds, dont la valeur de l'étiquette est la même et qui sont associés par un arc, sont reliés entre eux par un segment représentatif de l'arc.

On conçoit ainsi que, pour une pluralité de messages 12 à analyser stockés dans une table principale 10, l'ensemble des messages 12 à analyser est segmenté en une pluralité de données enregistrées dans les tables d'association 20 dont la taille est inférieure à la taille de la table principale 10. Ceci a pour effet de réduire les temps de calcul liés à l'analyse des messages 12. Ceci est obtenu en recherchant dans au moins un champ 16 relatif au contenu d'un premier message 12, la valeur d'un champ 14, dit champ cible, d'un deuxième message 12, puis en enregistrant, dans une table d'association 20, un couple comportant un identifiant de la valeur du champ cible du premier message 12 et un identifiant de la valeur du champ cible du deuxième message 12.

En outre, la mémorisation d'un couple comportant un identifiant de la valeur d'un deuxième champ, distinct du champ cible, de chacun des messages sources, permet l'établissement, avec des temps de calcul moindres, de liens entre les valeurs de champs 14 distincts.

De tels traitements permettent en outre de minimiser les temps de calcul et d'améliorer la rapidité du système suite à des requêtes d'un utilisateur.

## Revendications

**1.** Procédé d'analyse d'une pluralité de messages (12), chaque message (12) comprenant une pluralité de champs (14, 16, 18) deux à deux distincts, dont au moins un champ (16) relatif au contenu du message (12) et un champ (18) relatif au contexte d'émission du message, chaque champ (14, 16, 18) comportant une valeur,
le procédé étant mis en oeuvre par un ordinateur et étant **caractérisé en ce qu'**il comporte :

- une étape de recherche (105), dans au moins un champ relatif au contenu d'un premier message, de la valeur d'un champ cible (14, 16, 18) d'un deuxième message (12) ;
- une étape de mémorisation (110), dans une mémoire (20), d'un couple comportant un identifiant de la valeur du champ cible (14, 16, 18) du premier message (12) et un identifiant de la valeur du champ cible (14, 16, 18) du deuxième message (12) ;
- une étape (135) d'agrégation des messages (12) par thèmes, chaque thème comprenant des messages (12) présentant une similarité supérieure à une valeur prédéterminée selon une fonction de similarité prédéterminée ;
- pour chaque thème, une étape de mémorisation (140) d'un n-uplet comprenant un identifiant du thème et un identifiant de chaque message (12) correspondant ;
- une étape (145) de calcul d'une fonction de similarité d'un premier thème et d'un deuxième thème, la fonction de similarité vérifiant :

$$S(c,c') = r_c \bullet r_{c'} - \frac{1}{4}\left(|c| \times |r_{c'}| + |c'| \times |r_c|\right)$$

où c et c' sont deux thèmes, $r_c$ est un vecteur représentatif du thème c, $r_{c'}$ est un vecteur représentatif du thème c', • désigne le produit scalaire, |c| est le nombre de messages (12) du thème c, |c'| est le nombre de messages (12) du thème c', $|r_c|$ est la norme 1 du vecteur $r_c$ et $|r_{c'}|$ est la norme 1 du vecteur $r_{c'}$, la norme 1 d'un vecteur étant la somme des valeurs absolues des composantes du vecteur ; et
- une étape de mémorisation (150) d'un couple comprenant un identifiant du premier thème et un identifiant du deuxième thème, si le résultat de l'étape de calcul est supérieur à un seuil prédéfini.

2. Procédé selon la revendication 1, **caractérisé en ce que** le champ cible (14, 16, 18) du deuxième message est différent du champ (16) relatif au contenu du premier message.

3. Procédé selon la revendication 1 ou 2, **caractérisé en ce qu'**il comporte une étape de mémorisation (110), dans la mémoire (20) d'un couple comportant un identifiant de la valeur d'un deuxième champ (14, 16, 18), distinct du champ cible (14, 16, 18), du premier message (12) et du deuxième message (12).

4. Procédé selon l'une quelconque des revendications précédentes, **caractérisé en ce que** l'étape (135) d'agrégation des messages (12) comprend l'optimisation d'une fonction-objectif.

5. Procédé selon la revendication 4, **caractérisé en ce que** l'étape (135) d'agrégation des messages (12) comprend la minimisation d'une première fonction-objectif vérifiant :

$$J = \sum_{i=1}^{K} \sum_{x_j \in C_i} \left\| x_j - c_i \right\|^2$$

où K est le nombre de thèmes à construire, $C_i$ est le $i^{ème}$ thème, $x_j$ est un vecteur représentant le $j^{ème}$ message (12) du thème $C_i$ et $c_i$ est le barycentre des messages (12) appartenant au thème $C_i$ et $\|x_j\text{-}c_i\|$ est la norme euclidienne du vecteur $x_j - c_i$.

6. Procédé selon la revendication 4 ou 5, **caractérisé en ce que** l'étape (135) d'agrégation des messages (12) comprend la maximisation d'une deuxième fonction-objectif vérifiant :

$$F(C) = \sum_{i=1}^{N} \sum_{j=1}^{N} \left( s_{ij} c_{ij} + \left( \frac{s_{ii} + s_{jj}}{2} - s_{ij} \right)\left(1 - c_{ij}\right) \right)$$

où N est le nombre total de messages (12) à traiter, $s_{ij}$ est la valeur de la similarité entre deux messages (12) identifiés par des identifiants i et j, $c_{ij}$ est un terme valant 1 si le $i^{ème}$ et le $j^{ème}$ messages (12) appartiennent au même thème et 0 sinon.

7. Procédé selon l'une quelconque des revendications précédentes, **caractérisé en ce qu'**il comporte :

- une étape (125) de lecture de la valeur d'au moins un champ (16) relatif au contenu d'un message (12) ;
- une étape (125) d'analyse sémantique de la ou chaque valeur lue et d'extraction de mots-clés relatifs à la ou chaque valeur lue.

8. Procédé selon l'une quelconque des revendications précédentes, **caractérisé en ce qu'**il comporte :

- l'affichage d'une vue (200) comportant une pluralité de graphes (201, 202, 204, 206, 208), chaque graphe étant associé à un élément parmi les messages (12), les champ (14, 16, 18) et des thèmes, un thème étant un ensemble comprenant une pluralité de message (12) dont les contenus présentent, selon une fonction de similarité prédéterminée, une similarité supérieure à une valeur prédéterminée, chaque graphe (201, 202, 204, 206, 208) comprenant au moins un nœud (210), chaque nœud d'un graphe (201, 202, 204, 206, 208) étant associé à un identifiant d'un message (12) ou d'un thème ou d'une valeur du champ (14, 16, 18) correspondant au graphe (201, 204, 206, 208) ;
- la sélection d'au moins un nœud (210) par un utilisateur ;
- l'affichage de nœuds (210) couplés au ou à chaque nœud (210) sélectionné et du ou des nœuds (210) sélectionnés de manière distinctive par rapport aux autres nœuds (210), les nœuds (210) couplés étant des nœuds (210) associés à des identifiants formant chacun avec l'identifiant associé à un nœud (210) sélectionné l'un des couples mémorisés.

9. Produit programme d'ordinateur comportant des instructions logicielles qui, lorsqu'elles sont mises en œuvre par un ordinateur, mettent en œuvre le procédé selon l'une quelconque des revendications 1 à 8.

10. Dispositif (2) d'analyse d'une pluralité de messages (12), chaque message (12) comprenant une pluralité de champs (14, 16, 18) deux à deux distincts, dont au moins un champ (16) relatif au contenu du message et un champ (18) relatif au contexte d'émission du message, chaque champ (14, 16, 18) comportant une valeur, **caractérisé en ce qu'**il est propre à mettre en œuvre le procédé d'analyse selon l'une quelconque des revendications 1 à 8.

**Patentansprüche**

1. Verfahren zum Analysieren einer Mehrzahl von Nachrichten (12), wobei jede Nachricht (12) eine Mehrzahl von paarweise unterschiedlichen Feldern (14, 16, 18) aufweist, die mindestens ein Feld (16), das sich auf den Inhalt der Nachricht (12) bezieht, und ein Feld (18), das sich auf den Übertragungskontext der Nachricht bezieht, aufweisen, wobei jedes Feld (14, 16, 18) einen Wert aufweist, wobei das Verfahren von einem Computer ausgeführt wird und **dadurch gekennzeichnet ist, dass** es Folgendes beinhaltet:

   - einen Schritt zum Suchen (105) in mindestens einem Feld, das sich auf den Inhalt einer ersten Nachricht bezieht, nach dem Wert eines Zielfeldes (14, 16, 18) einer zweiten Nachricht (12);
   - einen Schritt zum Speichern (110) eines Paares in einem Speicher (20), das einen Identifikator des Wertes des Zielfeldes (14, 16, 18) der ersten Nachricht (12) und einen Identifikator des Wertes des Zielfeldes (14, 16, 18) der zweiten Nachricht (12) aufweist;
   - einen Schritt (135) zum Zusammenfassen der Nachrichten (12) nach Themen, wobei jedes Thema Nachrichten (12) aufweist, die eine Ähnlichkeit aufweisen, die größer als ein vorbestimmter Wert gemäß einer vorbestimmten Ähnlichkeitsfunktion ist;
   - für jedes Thema einen Schritt zum Speichern (140) eines n-Tupels, das einen Identifikator des Themas und einen Identifikator jeder entsprechenden Nachricht (12) beinhaltet;
   - einen Schritt (145) zum Berechnen einer Ähnlichkeitsfunktion eines ersten Themas und eines zweiten Themas, wobei die Ähnlichkeitsfunktion erfüllt:

$$S(c,c') = r_c \bullet r_{c'} - \frac{1}{4}\left(|c| \times |r_{c'}| + |c'| \times |r_c|\right)$$

   wobei c und c' zwei Themen sind, $r_c$ ein Vektor ist, der das Thema c darstellt, $r_{c'}$ ein Vektor ist, der das Thema c' darstellt, • das Skalarprodukt bezeichnet, |c| die Anzahl der Nachrichten (12) des Themas c ist, |c'| die Anzahl der Nachrichten (12) des Themas c' ist, $|r_c|$ ist 1-Norm des Vektors $r_c$ ist und $|r_{c'}|$ die 1-Norm des Vektors $r_c$, ist, wobei die 1-Norm eines Vektors die Summe der Beträge der Komponenten des Vektors ist; und
   - einen Schritt zum Speichern (150) eines Paares, das einen Identifikator des ersten Themas und einen Identifikator des zweiten Themas aufweist, wenn das Ergebnis des Berechnungsschritts größer als ein vordefinierter Schwellenwert ist.

2. Verfahren nach Anspruch 1, **dadurch gekennzeichnet, dass** sich das Zielfeld (14, 16, 18) der zweiten Nachricht von dem Feld (16) bezüglich des Inhalts der ersten Nachricht unterscheidet.

3. Verfahren nach Anspruch 1 oder 2, **dadurch gekennzeichnet, dass** es einen Schritt zum Speichern (110) im Speicher (20) eines Paares aufweist, das einen Identifikator des Wertes eines zweiten Feldes (14, 16, 18) aufweist, das sich von dem Zielfeld (14, 16, 18), der ersten Nachricht (12) und der zweiten Nachricht (12) unterscheidet.

4. Verfahren nach einem der vorhergehenden Ansprüche, **dadurch gekennzeichnet, dass** der Schritt (135) des Zusammenfassens der Nachrichten (12) das Optimieren einer Zielfunktion aufweist.

5. Verfahren nach Anspruch 4, **dadurch gekennzeichnet, dass** der Schritt (135) des Zusammenfassens der Nachrichten (12) das Minimieren einer ersten Zielfunktion aufweist, die erfüllt:

$$J = \sum_{i=1}^{K} \sum_{x_j \in C_i} \left\| x_j - c_i \right\|^2$$

wobei K die Anzahl der zu erstellenden Themen ist, $C_i$ das i-te Thema ist, $x_j$ ein Vektor ist, der die j-te Nachricht (12) des Themas $C_i$ darstellt, und $c_i$ der Schwerpunkt der Nachrichten (12), die zum Thema C gehören, ist, und $\|x_j - c_i\|$ die euklidische Norm des Vektors $x_j - c_i$ ist.

6. Verfahren nach Anspruch 4 oder 5, **dadurch gekennzeichnet, dass** der Schritt (135) des Zusammenfassens der Nachrichten (12) das Maximieren einer zweiten Zielfunktion aufweist, die erfüllt:

$$F(C) = \sum_{i=1}^{N} \sum_{j=1}^{N} \left( s_{ij} c_{ij} + \left( \frac{s_{ii} + s_{jj}}{2} - s_{ij} \right) (1 - c_{ij}) \right)$$

wobei N die Gesamtzahl der zu verarbeitenden Nachrichten (12) ist, $s_{ij}$ der Wert der Ähnlichkeit zwischen zwei Nachrichten (12) ist, die durch die Identifikatoren i und j identifiziert werden, $c_{ij}$ ein Term gleich 1 ist, wenn die i-te und die j-te Nachricht (12) zum gleichen Thema gehören, und ansonsten 0 ist.

7. Verfahren nach einem der vorhergehenden Ansprüche, **dadurch gekennzeichnet, dass** es aufweist:

   - einen Schritt (125) zum Lesen des Wertes von mindestens einem Feld (16), das sich auf den Inhalt einer Nachricht (12) bezieht;
   - einen Schritt (125) zur semantischen Analyse des oder jedes gelesenen Wertes und zur Extraktion von Schlüsselwörtern in Bezug auf den oder jeden gelesenen Wert.

8. Verfahren nach einem der vorgenannten Ansprüche, **dadurch gekennzeichnet, dass** es aufweist:

   - das Anzeigen einer Ansicht (200) mit einer Mehrzahl von Graphen (201, 202, 204), 206, 208), wobei jeder Graph einem Element unter den Nachrichten (12), den Feldern (14, 16, 18) und den Themen zugeordnet ist, wobei ein Thema ein Menge ist, die eine Mehrzahl von Nachrichten (12) aufweist, deren Inhalt gemäß einer vorbestimmten Ähnlichkeitsfunktion eine Ähnlichkeit aufweist, die größer als ein vorbestimmter Wert ist, wobei jeder Graph (201, 202, 204, 206, 208) mindestens einen Knoten (210) aufweist, wobei jeder Knoten eines Graphen (201, 202, 204, 206, 208) einem Identifikator einer Nachricht (12) oder eines Themas oder eines Feldwerts (14, 16, 18) entsprechend dem Graphen (201, 204, 206, 208) zugeordnet ist;
   - die Auswahl von mindestens einem Knoten (210) durch einen Benutzer;
   - das Anzeigen von Knoten (210), die mit dem oder jedem ausgewählten Knoten (210) gekoppelt sind, und des oder jedes ausgewählten Knotens (210) auf im Vergleich zu den anderen Knoten (210) unterschiedliche Art, wobei die gekoppelten Knoten (210) Knoten (210) sind, die Identifikatoren zugeordnet sind, die jeweils mit dem Identifikator, der einem ausgewählten Knoten (210) zugeordnet ist, eines der gespeicherten Paare bilden.

9. Computerprogrammprodukt, aufweisend Softwareanweisungen, die, wenn sie von einem Computer implementiert werden, das Verfahren nach einem der Ansprüche 1 bis 8 ausführen.

10. Vorrichtung (2) zum Analysieren einer Mehrzahl von Nachrichten (12), wobei jede Nachricht (12) eine Mehrzahl von paarweise unterschiedlichen Feldern (14, 16, 18) aufweist, von denen sich mindestens ein Feld (16) auf den Inhalt

14

der Nachricht (12) und ein Feld (18) auf den Übertragungskontext der Nachricht bezieht, wobei jedes Feld (14, 16, 18) einen Wert aufweist, **dadurch gekennzeichnet, dass** es geeignet ist, das Analyseverfahren nach einem der Ansprüche 1 bis 8 durchzuführen.

**Claims**

1. A method for analyzing a plurality of messages (12), each message (12) comprising a plurality of fields (14, 16, 18) which are distinct two-by-two, including at least one field (16) relative to the content of the message (12) and one field (18) relative to the emission context of the message, each field (14, 16, 18) comprising a value, the method being implemented by a computer and being **characterized in that** it comprises:

   - a step of searching (105), in at least one field relative to the content of a first message, for the value of a target field (14, 16, 18) of a second message (12);
   - a step of storing (110), in a memory (20), a pair comprising an identifier of the target field (14, 16, 18) value of the first message (12) and an identifier of the target field value (14, 16, 18) of the second message (12);
   - a step (135) of aggregating messages (12) by themes, each theme comprising messages (12) having a similarity above a predetermined value according to a predetermined similarity function;
   - for each theme, a step of storing (140) an n-uplet comprising an identifier of the theme and an identifier of each corresponding message (12);
   - a step (145) of calculating a similarity function of a first theme and a second theme, the similarity function verifying:

$$S(c,c') = r_c \bullet r_{c'} - \frac{1}{4}\left(|c| \times |r_{c'}| + |c'| \times |r_c|\right)$$

   where c and c' are two themes, $r_c$ is a vector representative of the theme c, $r_{c'}$ is a vector representative of the theme c', • designates the scalar product, |c| is the number of messages (12) for the theme c, |c'| is the number of messages (12) for the theme c', $|r_c|$ is the norm 1 of the vector $r_c$ and $|r_{c'}|$ is the norm 1 of the vector $r_{c'}$, the norm 1 of a vector being the sum of the absolute values of the components of the vector;
   - a step of storing (150) a pair comprising an identifier of the first theme and an identifier of the second theme, if the result of the calculation step is above a predefined threshold.

2. The method according to claim 1, **characterized in that** the target field (14, 16, 18) of the second message is different from the field (16) relative to the content of the first message.

3. The method according to claim 1 or 2, **characterized in that** it comprises a step of storing (110), in the memory (20), a pair comprising an identifier of a second field (14, 16, 18) value, distinct from the target field (14, 16, 18), of the first message (12) and the second message (12).

4. The method according to any one of the preceding claims, **characterized in that** the step (135) of aggregation of the messages (12) comprises optimizing an objective function.

5. The method according to claim 4, **characterized in that** the step (135) of aggregation of the messages (12) comprises minimizing a first objective function verifying:

$$J = \sum_{i=1}^{K} \sum_{x_j \in C_i} \left\| x_j - c_i \right\|^2$$

   where K is the number of themes to be built, $C_i$ is the $i^{th}$ theme, $x_j$ is a vector representing the $j^{th}$ message (12) of the theme $C_i$, and is the barycenter of the messages (12) belonging to the theme and $\|x_j\text{-}c_i\|$ is the Euclidean norm of the vector $x_j - c_i$.

6. The method according to claim 4 or 5, **characterized in that** the message (12) aggregation step (135) comprises maximizing a second objective function verifying:

$$F(C) = \sum_{i=1}^{N} \sum_{j=1}^{N} \left( s_{ij} c_{ij} + \left( \frac{s_{ii} + s_{jj}}{2} - s_{ij} \right) \left( 1 - c_{ij} \right) \right)$$

where N is the total number of messages (12) to be processed, $s_{ij}$ is the value of the similarity between two messages (12) identified by identifiers i and j, $c_{ij}$ is a term equal to 1 if the $i^{th}$ and $j^{th}$ messages (12) belong to the same theme and 0 otherwise.

7. The method according to any one of the preceding claims, **characterized in that** it comprises:

   - a step (125) of reading the value of at least one field (16) relative to the content of a message (12);
   - a step (125) of performing a semantic analysis of the or each read value and extracting keywords relative to the or each read value.

8. The method according to any one of the preceding claims, **characterized in that** it comprises:

   - displaying a view (200) comprising a plurality of graphs (201, 202, 204, 206, 208), each graph being associated with one element from among the messages (12), field (14, 16, 18) and themes, a theme being a set comprising a plurality of messages (12) whose content has, according to a predetermined similarity function, a similarity above a predetermined value, each graph (201, 202, 204, 206, 208) comprising at least one node (210), each node of a graph (201, 202, 204, 206, 208) being associated with an identifier of the message (12) or a theme or a value of the field (14, 16, 18) corresponding to the graph (201, 204, 206, 208);
   - having a user select at least one node (210);
   - displaying nodes (210) coupled to the or each selected node (210) and node(s) (210) selected distinctively relative to the other nodes (210), the coupled nodes (210) being nodes (210) associated with identifiers each forming one of the stored pairs with the identifier associated with a selected node (210).

9. A computer program product comprising software instructions which, when implemented by a computer, carry out the method according to any one of claims 1 to 8.

10. A device (2) for analyzing a plurality of messages (12), each message (12) comprising a plurality of fields (14, 16, 18) which are distinct two by two, including at least one field (16) relative to the content of the message and one field (18) relative to the emission context of the message, each field (14, 16, 18) comprising a value, **characterized in that** it is able to carry out the method according to any one of claims 1 to 8.

## FIG.1

## FIG.2

| Association | — 105 |
| Mémorisation | — 110 |
| Analyse sémantique | — 125 |
| Regroupement thématique | — 135 |
| Calcul de similarité inter-thème | — 145 |
| Mémorisation | — 150 |
| Synthèse | — 155 |
| Attente | — 157 |

FIG.3

FIG.4

$T=\{N_k \in N / \text{date}(N_k) \in \text{plage personnalisée}\}$ —— 300

$\downarrow$

Sélection d'un nœud $N_i$ dans T —— 305

$\downarrow$

$C=\{N_k \in T / \exists A_i(N_i, N_k) \text{ ou } \exists A_k(N_k, N_i)\}$ —— 310

$\downarrow$

$S=\{N_k \in C / \text{étiquette}(N_k) \neq \text{étiquette}(N_i)\}$ —— 315

$\downarrow$

Affichage du graphe —— 320

## FIG.5

FIG.6

EP 3 114 597 B1

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

### Documents brevets cités dans la description

- EP 2560111 A2
- EP 1960916 A1